# EUROPEAN PATENT APPLICATION

(11) **EP 2 778 004 A2**
(43) Date of publication of application: **17.09.2014**
(21) Application number: 14155740.5
(22) Date of filing: 19.02.2014
(51) Int. Cl.: B60W 20/00

(54) **Control and operator interface for combine having hybrid drive**

(30) Priority: 15.03.2013 US 201313841101
(71) Applicant: DEERE & COMPANY, Moline, Illinois 61265-8098 (US)
(72) Inventor: Van Meter, Douglas, Raleigh, NC North Carolina 27603 (US); Sanchez, Julian, Leclair, IA Iowa 52753 (US); Sheidler, Alan D, Moline, IL Illinois 61265 (US)
(74) Representative: Holst, Sönke

(57) **Abstract**

Methods are provided to operate a battery electric drive for a combine to ensure battery charge sufficiency during operation of the drive. One method includes monitoring the actual state of charge (SOC) of the battery pack during combine operation; calculating a running average of the actual SOC over a selected time interval; and adjusting the combine power when the running average SOC deviates from a target SOC. Another method differs in that actual SOC is compared to a bell curve of time related SOC measurements having a mean and standard deviations and only adjusts the combine power when an actual SOC measurement is outside the target SOC by an amount greater than the standard deviations. An operator display includes hybrid system power, RPM gauge, a SOC gauge and a battery pack direction flow of power.

## Description

This invention relates to an apparatus, system and method for driving a combine harvester with a battery electric hybrid drive.

The engine load on an internal combustion engine in a combine harvester or "combine" may increase as the vegetation density or yield increases in certain zones in a field. Internal Combustion ("IC") engines are used to power combines under a wide variety of load conditions and must be able to accept sudden changes in load. When the combine is in a transport mode, sudden increases in power and torque are required from the engine when negotiating the terrain between fields. Tillage in the field also presents conditions where there are sudden increases in load due to changes in soil condition, where the resistance of the tillage tool increases significantly or the field has steep inclines. Engines of this type are expected to respond to these conditions by increasing output torque with relatively small variations of engine speed.

Combine harvesters currently have a basic engine torque curve to provide a nominal rated power at a power level approximately 14% below the power capability envelope of the engine. Experience has shown that a 14% power bulge with a 200 RPM droop in engine RPM provides good slug handling capability and enhanced drivability for the operator. This enables the use of a power boost for unloading or a power bulge for additional power to handle gradual increases in a load or to handle slugs or other operational overloads without excessive loss of functional engine speed or the stalling of the engine. Traditional engine torque curves for combines have been developed to use this high level of power bulge above the normal rated power in order to enhance the ability of the power train and threshing system to handle the slugs and transient overloads during the harvesting operation. Such an overload may occur when clumps of moist material suddenly enter the threshing system causing higher, short duration overloads.

At the lower power end of the operational spectrum, combines also spend significant time at very light loads, such as idling or traveling down hills. In these cases, the high end torque curves that work well for performance, such as slug acceptance, high threshing loads, unloading grain on the go, etc., do not return as good fuel economy as an engine torque curve optimized for a lower power level operation.

One approach to providing a boost in power is to provide a battery electric motor drive to supplement the IC engine power. Battery electric hybrid drives for combine harvesters are known, such as described in US Patent 7,949,442, herein incorporated by reference.

The present inventors have recognized that one issue with electric hybrid harvesters that are enabled by energy storage is managing the charge of the battery pack to maximize its life while at the same time achieving a useful increase in power. In this particular context, a hybrid electric system is desired to store energy in a battery pack and uses this energy when the harvester is in need of additional power.

The present inventors have also recognized the desirability to make the operator aware of the interaction between power consumption of the harvester and the charging of the battery pack. If the operator runs the combine at capacity such that the battery pack is always being drained, eventually the extra boost provided by the battery pack will be dissipated. Conversely, if the operator does not know the upper limits of the combine, then he may not take advantage of the electric boost available.

The invention provides a control of a hybrid electric hybrid drive for a combine. The invention also provides an operator interface for the drive.

A first method is an automatic control with limited operator involvement. A control algorithm would automatically adjust available combine power to add power when needed, without direction from the operator.

According to the first method, the control utilizes a control algorithm to automatically control state-of-charge (SOC) of an electrical energy storage device such as a battery pack, by either increasing power demand by increasing ground speed or decreasing power demand such as by reducing combine ground speed.

The operator will be able to input a maximum engine power percentage that he wants to utilize or a default value can automatically be used. After a short time delay, the algorithm will determine the battery pack state-of-charge along with charge level trends. Based on this information, the control algorithm adjusts engine load accordingly. This can be accomplished by adjusting ground speed which increases or decreases the propulsion power and threshing power which brings the engine power to the correct percentage to allow recharging or increased discharging of the battery pack. This algorithm is implemented to ensure that when more power is demanded by the operator, the battery pack has the power available to meet that request.

According to a first method, a control algorithm can calculate a running average of the battery pack SOC.

A target battery pack SOC is set, it can be pre-determined. If the running SOC average is above the target, then the machine loading (combine power) can be increased. If the running SOC average is below the target, the machine loading can be decreased. If the running SOC average is on the target, then the machine loading can be maintained. Changes in machine loading can be accomplished by varying the ground speed of the combine.

By using the running average of battery pack SOC, momentary swings due to transient loads can be dampened out. The system will "learn" over time what the tendency of the harvest cycle is and can modify as time progresses. The time period for averaging could be a modifiable term or adjustable by the operator. For example, setting the system to "high" sensitivity might force averaging over a short time period (10 sec or 20 sec, for example). Setting to "low" sensitivity might raise this averaging time to 10 min, 20 min or more.

By using a running average SOC, variations are filtered and unnecessary adjustments are reduced.

A second method uses mean and standard deviation to gauge SOC and make necessary adjustments. According to this approach, the actual SOC is monitored over a time interval and the values of actual SOC are associated with time durations for those values of SOC. As one example, the time interval can be the immediately prior ten minutes refreshed every minute. The mean and standard deviation of SOC values versus time duration are calculated over the selected time interval. The combine power demand, such as the combine ground speed, is adjusted when the actual SOC falls outside a selected standard deviation, and the mean is thus shifted over time to line up with the target SOC.

If the instantaneous SOC is within the "desired" histogram or bell curve area: target SOC +/- Kσ, where σ is the standard deviation calculated over the time interval, then the combine speed is maintained. If instantaneous SOC is outside the bell curve area, then the combine speed is adjusted accordingly. For example, the target SOC can be set at 50% SOC and the K value can be selected to be 3. Alternately, the K value can be selected by the operator or can be a variable, such as varying with the value of the SOC.

Over time, the mean SOC will shift toward the target SOC, but instantaneous values of SOC can be to the right or left of the target as long as within the bell-shaped target region.

A third method of the invention includes operator involvement. The operator would gain active feedback regarding the hybrid drive and the SOC of the battery pack and would be able to input a percentage of maximum engine power to utilize.

According to this aspect of the invention, a user interface for a hybrid drive for a combine is provided. The user interface can be integrated with the aforementioned automatic controls or correspond to manual, operator control of the hybrid drive. It not only displays the battery pack state-of-charge, it also shows the operator when he is benefitting from the extra power afforded to him from battery pack power. The interface includes a hybrid system power gauge, a tachometer and an adjacent SOC gauge. The SOC gauge depicts whether the battery pack is charging or discharging, which is depicted through the small arrows going to and from the hybrid system power gauge. In times of light load, the battery pack will be recharged and increase its state of charge (shown as green). During unloading on the go, slugs, or needs of transient response, the interface will tell the operator that the battery pack is being discharged (shown in orange). The operator can reduce combine power to increase battery pack SOC or increase combine power to decrease battery pack SOC, to utilize maximum combine power during operation.

Numerous other advantages and features of the present invention will become readily apparent from the following detailed description of the invention and the embodiments thereof, from the claims and from the accompanying drawings.
FIG. 1 is a block diagram of one embodiment of a system for a battery-electric hybrid drive for a combine harvester.
FIG. 2A is a first control algorithm diagram of combine speed control and battery pack state-of-charge for the battery-electric hybrid drive of Figure 1.
FIG. 2B is a second control algorithm diagram of combine speed control and battery pack state-of-charge for the battery-electric hybrid drive of Figure 1.
FIG. 3 is a diagram of actual battery pack state-of-charge versus time for a hybrid combine for the battery-electric hybrid drive of Figure 1.
FIG. 4 is a diagram of running average battery pack state-of-charge versus time for a hybrid combine for the battery-electric hybrid drive of Figure 1.
FIG. 5 is a bell curve diagram of % state-of-charge values versus % time.
FIG. 6 is a diagram of the positions of three SOC bell curve diagrams of Figure 5 compared to a target state of charge.
FIG. 7 is a depiction of an operator interface for the battery-electric hybrid drive of Figure 1 in a charging state.
FIG. 8 is a depiction of the operator interface of Figure 7 in a battery boost, electric motor assist state.

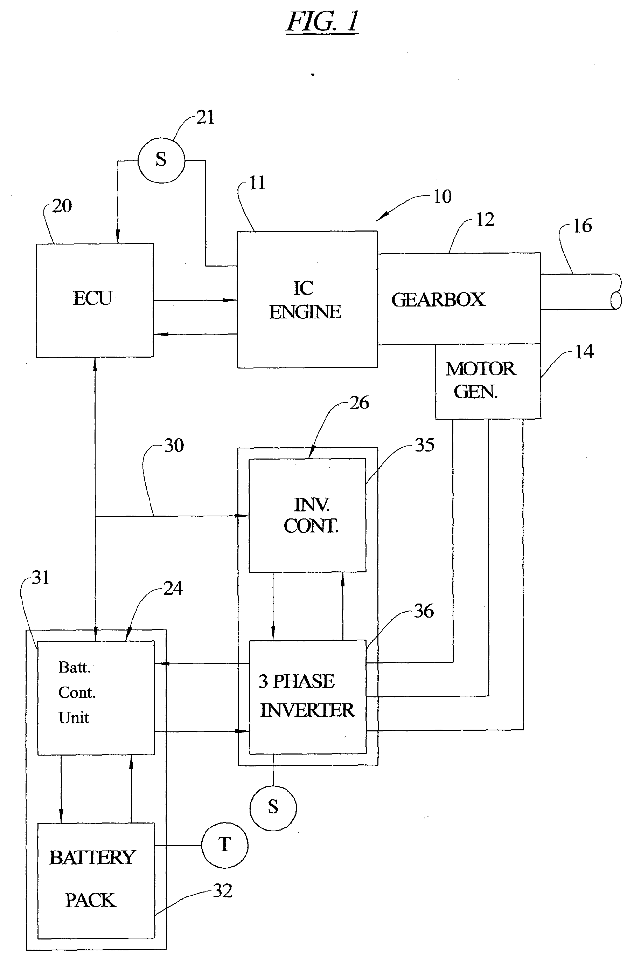

In accordance with one embodiment, FIG. 1 illustrates a system 10 for an electric hybrid drive for a combine harvester. The system 10 comprises an internal combustion engine 11 mechanically coupled to a gearbox 12. An electric motor/generator 14 is also coupled to the gearbox 12.

An output 16 (e.g., output shaft) of the gearbox 12 provides rotational energy for propelling the vehicle, operating implements, or both. The IC engine and the electric motor generator can both propel rotation of the output 16 via the gearbox. Alternatively, the IC engine 11 can propel rotation of the motor/generator 14 via the gearbox, especially when the motor/generator functions as a generator.

An electronic control unit (ECU) 20 is signal-connected to engine controls and sensors.

An engine speed sensor 21 (e.g., revolution per minute (RPM) sensor) is associated with the internal combustion engine 11. The output of the engine speed sensor is provided directly or indirectly to the ECU 20. If the engine speed sensor provides an analog output signal, an analog-to-digital (A/D) converter may be interposed between the engine speed sensor and the data processor.

The ECU 20 communicates with one or more of the following devices: the IC engine 11, an energy storage device 24, and a motor/generator control 26.

The lines interconnecting the foregoing devices 11, 24, 26 with the ECU 20 may represent one or more logical data paths, physical data paths, or both. For example, the interconnections may be realized as a databus such as an industry known CAN bus 30.

The energy storage device 24 can comprise a battery control unit 31 and a battery pack 32. The databus 30 is signal-connected to the battery control unit 31.

The motor control 26 can comprise an inverter control unit 35 that is signal-connected to a three-phase inverter 36. The databus 30 is signal connected to the inverter control unit 35.

The electric motor/generator 14 may operate in at least two modes: an electric propulsion mode and a power generation mode. In the electric propulsion mode, the electric motor/generator 14 acts as a motor where both an electric motor 14 and the engine 11 are active and propel the vehicle.

In the power generation mode, the electric motor/generator 14 acts as a generator. For example, in the power generation mode the engine 11 may drive the electric motor/generator 14.

In one configuration, the electric motor/generator 14 may comprise a direct current (DC) motor and a direct current (DC) generator.

In an alternative embodiment, the electric motor/generator 14 may comprise an alternating current (AC) motor/alternator that consumes and generates alternating current. If the electric motor/generator 14 or generator produces alternating current, a rectifier (e.g., full wave bridge rectifier or diode circuit) may be positioned between the electric motor/generator 14 and the energy storage device 24.

The motor control 26 (e.g., inverter or variable voltage source) is capable of providing a motor control signal to the electric motor/generator 14. The motor control signal may be used to control any of the following: motor rotational speed, motor torque, motor rotational direction, motor active or inactive status, and motor duty cycle.

The electric motor/generator 14 described has an alternating current configuration and the motor controller 26 comprises an inverter control unit 35 and three phase inverter 36 that converts direct current electric energy from the energy storage device 24 into alternating current. The inverter may comprise a chopper circuit, a switching circuit, or a variable frequency oscillator for controlling the frequency, phase, or pulse duration of the motor control signal to regulate or adjust an electric motor speed of the electric motor/generator 14.

Alternately, if the electric motor/generator 14 is a direct current configuration, the motor controller 26 may comprise a variable voltage source. The variable voltage source controls the voltage level or current level of the control signal to regulator or adjusts an electric motor speed of the electric motor/generator 14.

The energy storage device 24 comprises a battery pack 32. Alternately it could comprise an ultra-capacitor, a network of capacitors, a combination of the foregoing devices, or another storage device.

The energy storage device 24 receives and stores electrical energy generated by the electric motor/generator 14 in a power generation mode. The energy storage device 24 supplies stored electrical energy to the motor controller 26 in an electric propulsion mode.

The ECU 20 may comprise a microcontroller, a microprocessor, a digital signal processor, a programmable logic array, a logic device, or another device for processing data (e.g., sensor data provided by the engine speed sensor, the battery control unit 31, the inverter control unit 26, or a torque sensor). The ECU 20 may include a data storage device and data storage and retrieval software or instructions for retrieving or accessing reference data stored in the data storage device. The ECU 20 comprises an evaluator for evaluating or comparing engine speed data, engine torque data, energy storage status data (e.g., state-of-charge data), or other sensor data to reference data stored in the data storage device. The reference data may comprise baseline torque curve data, supplemental torque curve data, and engine speed data, for example.

The battery control unit 31 comprises a system for monitoring the energy storage status or state of charge (SOC) of the energy storage device 24 (e.g., battery pack). The battery control unit 31 may comprise one or more of the following components: a data processing device (e.g., microcontroller) or logic device, an ammeter or current meter, a volt meter, a thermometer, and a clock. The SOC represents the remaining capacity of a battery or battery pack in a charge/discharge cycle. The SOC may be expressed as the percentage of the remaining capacity to the full charge capacity of a cycle-aged battery pack. In one embodiment, the SOC of the battery pack may be estimated by measuring current drain and voltage levels at regular time intervals. In another embodiment, the SOC may be based on a battery model that takes into account one or more of the following: charging voltage, charging time, charging temperature, discharge rate, discharge temperature, charge recovery, cycle aging, electrochemical composition factors, and an electrical equivalent circuit. The state-of-charge data may be time-stamped or associated with a temporal indicator.

The invention provides a control of a battery electric hybrid drive for a combine. The invention also provides an operator interface for the drive.

A first method is an automatic control with limited operator involvement. A control algorithm would automatically adjust available combine power to add power when needed, without direction from the operator.

According to the first method, the control utilizes a control algorithm to automatically control a battery pack state-of-charge by either increasing or decreasing combine speed.

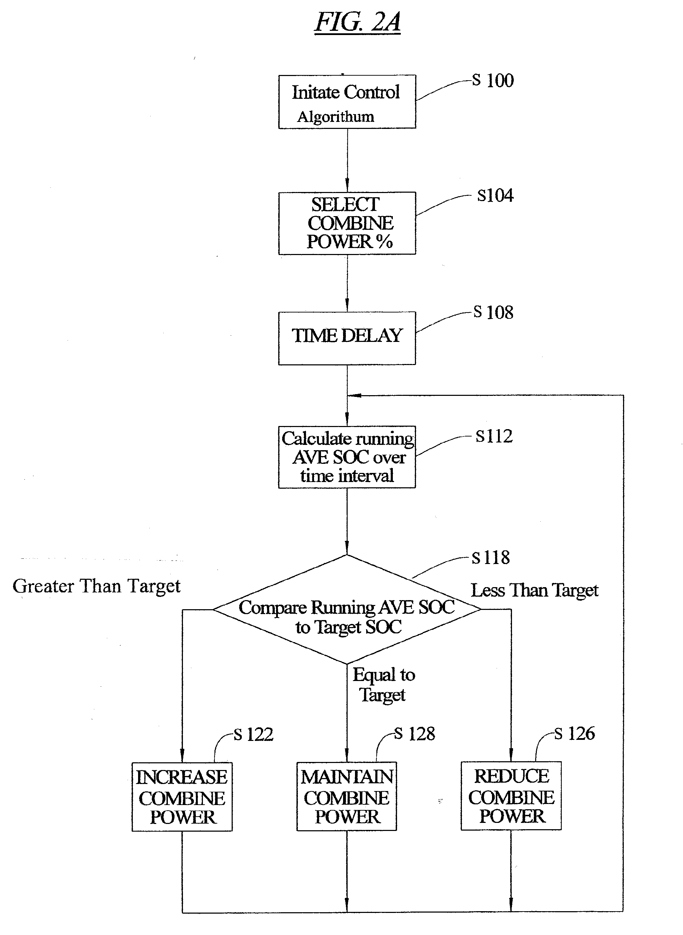

As shown in FIG. 2A, in step S100 the operator initiates the control. In step S104, the operator inputs a maximum engine power percentage that he wants to utilize. For example, the operator can select 99% power. Alternately, step S104 could be an automatic or pre-selected default value not selected by the operator. After a short time delay, step S108, the algorithm will determine the battery pack state-of-charge along with charge level trends. Based on this information, the control algorithm adjusts engine load accordingly. This is accomplished by adjusting ground speed which increases or decreases the propulsion power and threshing power which brings the engine power to the adjusted percentage to allow recharging of the battery pack or increased discharging of the battery pack. This algorithm is implemented to ensure that when more power is demanded by the operator, the battery pack has the power available to meet that request.

In step S112, the control algorithm calculates a running average of the battery pack SOC.

A target SOC is set, or pre-determined, for example 50% of maximum SOC for the battery pack. In step S118, the algorithm compares the running average SOC with the target SOC. In step S122, if the running SOC average is above the target SOC, then the machine loading can be increased. In step S126, if the running SOC average is below the target, the machine loading can be decreased. In step S128, if the running SOC average is above the target SOC, then the machine loading can be maintained. Changes in machine loading are accomplished by varying the ground speed of the combine.

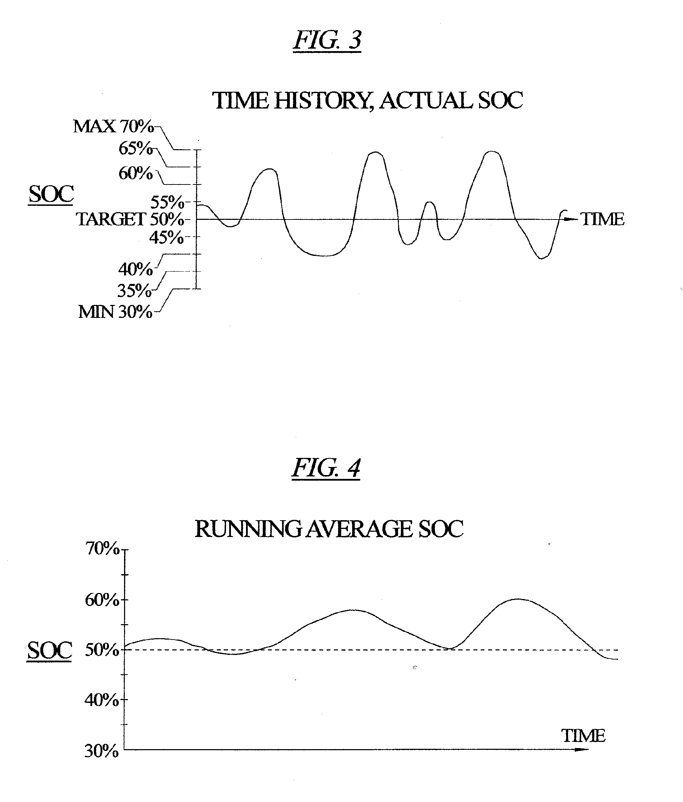

The actual values of SOC can be compared with the running average of AOC by comparing FIGS. 3 and 4. By using the running average of battery pack SOC, momentary swings due to transient loads can be dampened out. The system will "learn" over time what the tendency of the harvest cycle is and can modify as time progresses. The time period for averaging could be a modifiable term or adjustable by the operator. For example, setting the system to "high" sensitivity might force averaging over a short time period (10 sec or 20 sec, for example). Setting to "low" sensitivity might raise this averaging time to 10 min, 20 min or more.

By using a running average SOC to compare to the target SOC, variations are filtered and unnecessary adjustments are reduced.

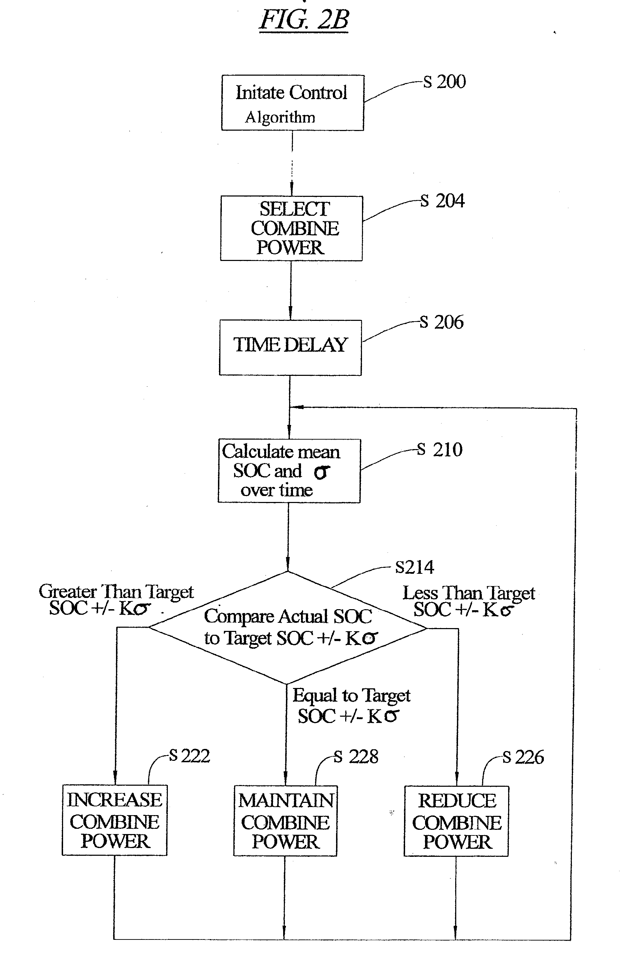

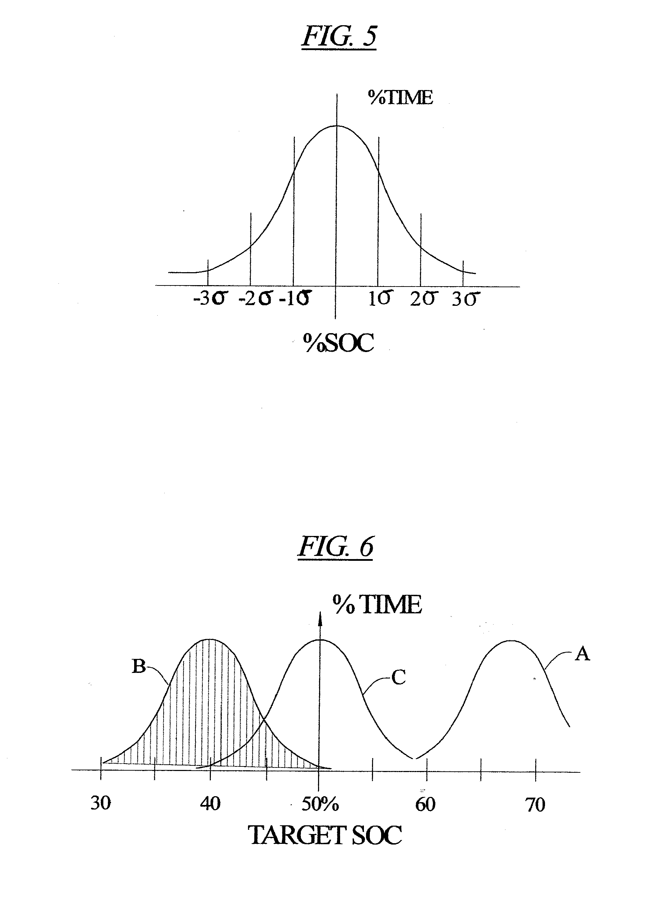

A second method uses statistical mean and standard deviation to control SOC and make necessary adjustments as illustrated in FIG. 2B. According to this method, the actual SOC values and time duration of those values are monitored over a time interval and the mean and standard deviation of SOC values over time are calculated over the selected time interval. For example, the actual SOC values and time durations can be monitored over the prior 10 minutes, refreshed every 1 minute. This is demonstrated in FIG. 5.

FIG. 5 illustrates a histogram or bell curve where after the actual SOC values and the time duration of the SOC values are calculated, the SOC values versus % time duration for those SOC values are calculated and standard deviations are calculated and noted in FIG. 5. The mean is the maximum % time duration and for +/- Kσ, K=0. The % time for the SOC values deceases from the maximum according to the bell curve to the left with K=-1, -2 and -3 and to the right with K= 1, 2, 3. The system speed is increased when the actual measured and calculated SOC is greater than a selected multiple of the calculated standard deviation added to the target SOC, and the mean is shifted over time to line up with the target SOC. The system speed is decreased when the actual measured and calculated SOC is less than a selected multiple of the calculated standard deviation subtracted from the target SOC, and the mean is shifted over time to line up with the target SOC.

FIG. 6 locates the histogram or bell curve onto an axis showing three positions. A position "A" of the bell curve is a position wherein the power is underutilized given a target SOC of 50%. The mean of this bell curve is centered around 68%. The algorithm would cause the combine power demand, such as ground speed, to be increased to shift this curve to the left. A position "B" of the bell curve is a position wherein the power is over utilized given a target SOC of 50%. The mean of this bell curve is centered around 43%. The algorithm would cause the combine power demand, such as ground speed, to be decreased to shift this curve to the right. A position "C" of the bell curve is the desired position wherein the mean of this bell curve is centered around 50% the target SOC. The algorithm would cause the combine power demand, such as ground speed, to be maintained. According to this position "C" some actual SOC would be measured below the target SOC of 50% and some actual SOC would be measured above the target SOC of 50%, but the mean would be at 50% and measured SOC values would be within +/- +/- Kσ, K being 3 in this example.

If instantaneous SOC is outside the bell curve area, then the system speed is adjusted accordingly.

FIG 2B illustrates the second method. In step S200, the operator initiates the control. In step S204 the operator selects combine power demand, such as by selecting the combine ground speed. In step S206, there is a time delay. In step S210, the algorithm calculates a mean SOC and a standard deviation over an interval of time, such as an immediately prior interval of time. In step S214 the actual SOC is compared to the target SOC +/- Kσ. For example, the target SOC can be 50% of maximum battery SOC and K can equal 3. The symbol σ is the standard deviation. The immediately prior interval of time for example can be 10 minutes refreshed every one minute. The interval of time and the refresh rate can be longer or shorter in duration. The interval of time can be adjustable or selectable by the operator. The value of K can be a variable based on SOC or can be selectable by the operator to increase or decrease "sensitivity" such as the frequency of engine power corrections.

In step S222, if the actual SOC is greater than the target range SOC +/- Kσ then the combine power demand, such as ground speed, is increased. In other words, the SOC is high enough that the combine power is underutilized and can be increased. In step S226, if the actual SOC is less than the target range SOC +/- Kσ then the combine power demand, such as ground speed, is decreased. In other words, the SOC is low enough that the combine power is over utilized and should be decreased to ensure that sufficient battery power is available when needed. In step S228, if the actual SOC is within the target range SOC +/- Kσ then the combine power demand, such as ground speed, need not be changed.

Over time, the mean SOC will shift toward the target SOC, as shown in FIG. 6, but instantaneous values of SOC can be to the right or left of the target as long as within the bell-shaped target region.

The third method is one where the operator is involved. The operator would gain active feedback regarding the hybrid drive and would be able to input a percentage of maximum engine power he wants to utilize.

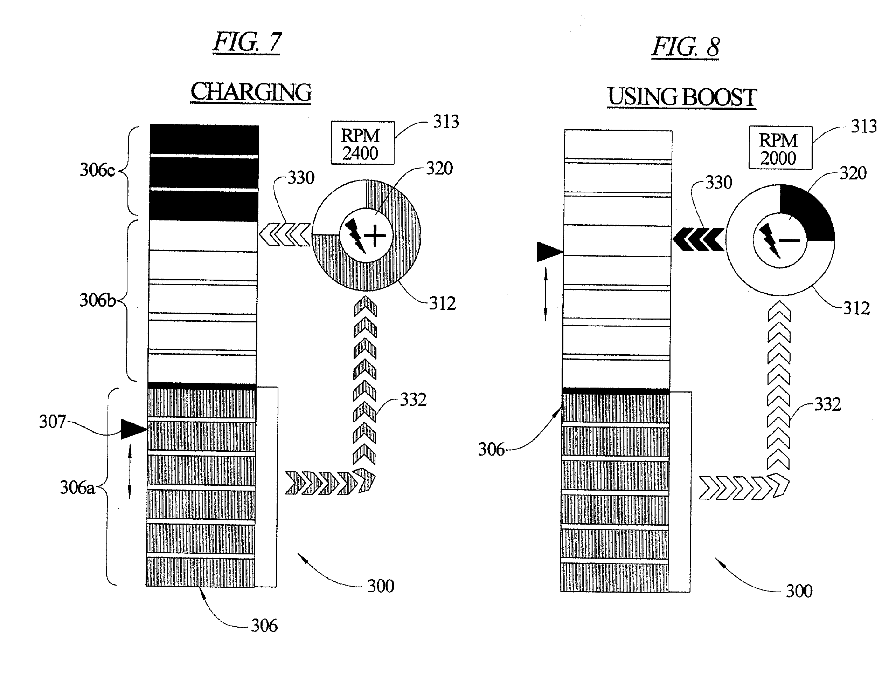

According to this method, a user interface 300 for a hybrid drive for a combine is provided. The user interface is illustrated in FIGS. 7 and 8 and could be displayed on an operator screen. The user interface 300 can be integrated with the aforementioned automatic controls or correspond to a manual, operator control of the hybrid drive. The interface 300 includes a combine power gauge 306 that uses a moving arrow 307 that indicates combine power along the gauge 306, an SOC gauge 312, and a tachometer 313. The gauge 306 and the moving arrow 307 show the total combined power of the hybrid drive including the IC engine 11 and the electric motor/generator 14. The arrow moves over a green region 306a, a yellow region 306b and a red region 306c. Generally, operating in the green region 306a at low combine power provides charging to the battery pack. Operating in the yellow region draws some battery boost power and operating in the red region draws full battery boost or power. The SOC gauge 312 not only displays the battery pack SOC, it also shows the operator when he is benefitting from the extra power afforded to him from battery power. The SOC gauge 312 depicts whether the battery pack is charging or discharging with "+" and "-" indicators 320. The gauge 312 also shows whether the battery pack is charging or discharging with arrow indicators going to (330) and from (332) the power gauge 306.

In times of light load, the battery pack will be recharged and increase its state of charge. During unloading on the go, slugs, or needs of transient response, the interface will tell the operator that the battery pack is being discharged. The interface allows an operator to manually adjust the combine load, such as to increase ground speed while monitoring the SOC drop, or to decrease speed, while monitoring the SOC gain. Alternately, the above described control algorithms can be automatically initiated to control engine speed and power to maintain the SOC at a target amount.

FIG. 7 illustrates the operator interface 300 in a battery pack charging state. The IC engine is charging the battery pack. The power indicator arrow 307 is in the green region and the tachometer shows 2400 rpm. The SOC indicator 312 shows about 75% useful charge range, the charge indicator is at "+", and the arrow indicators 332 are illuminated to show power flow from the power gauge 306 to the SOC gauge 312. The arrow indicators 330 are not illuminated.

The useful charge range illustrated by the SOC gauge 312 need not be calibrated to exactly match the SOC percentages, in other words, a 75% on the gauge 312 doesn't have to correlate to a 75% SOC. Particularly, since the SOC may be controlled to not deviate too greatly from 50% SOC, the range displayed on the gauge 312 may show a smaller overall range of SOC values. For example, a 100% on the SOC gauge 312 can correspond to a 70% SOC and a 0% on the SOC gauge 312 can correspond to a 30% SOC gauge.

FIG. 8 illustrates the operator interface 300 in a battery boost state. The battery pack, through an electric motor, is providing power to the IC engine and the combine. The power gauge 306 is in the yellow range and the tachometer 313 is at 2000 RPM. The SOC indicator 312 shows about 25% useful charge range, the charge indicator is at "-", and the arrow indicators 330 are illuminated to show power flow from the SOC gauge 312 to the power gauge 306. The arrow indicators 332 are not illuminated. At about 25% shown the SOC gauge the display shows the 25% amount and lesser amounts in orange rather than green to alert the operator of low battery pack charge.

The operator interface 300 for the hybrid combine shows the driver when the combine is benefitting from the power increase provided by the battery pack, and shows live feedback of the battery pack state of charge.

From the foregoing, it will be observed that numerous variations and modifications may be effected without departing from the spirit and scope of the invention. It is to be understood that no limitation with respect to the specific apparatus illustrated herein is intended or should be inferred.

## Claims

1. A method of operating a hybrid electric drive for a combine, comprising:
establishing a target state of charge of an electrical energy storage device of the combine;
monitoring actual state of charge of the electrical energy storage device during combine operation;
calculating a running average of the actual state of charge over a selected time interval; and
when the running average is less than the target state of charge, decreasing combine power.

2. The method according to claim 1, comprising the further step of when the running average is greater than the target state of charge, increasing combine power;

3. The method according to claim 1, wherein the step of establishing a target state of charge is further defined in that the target state of charge is selected to be about 50% state of charge.

4. The method according to claim 1 wherein the electrical energy storage device comprises a battery pack.

5. A method of operating a hybrid electric drive for a combine, preferably according to one of claims 1 to 4, comprising:
establishing a target state of charge of an electrical energy storage device of the combine;
monitoring actual state of charge of the electrical energy storage device during combine operation; and
calculating a mean and standard deviation (σ) of the actual state of charge over a selected time interval;
when the actual state of charge after the time interval is less than the target state of charge minus a first selected number of σ, decrease combine power.

6. The method according to claim 5, comprising the further step of when the actual state of charge after the time interval is greater than the target state of charge plus a second selected number of σ, increasing combine power.

7. The method according to claim 6, wherein the first and second selected number of σ are equal.

8. The method according to claim 7, wherein the first and second selected number of σ is three.

9. The method according to claim 5, wherein the step of establishing a target state of charge is further defined in that the target state of charge is selected to be about 50% state of charge.

10. The method according to claim 5 wherein the electrical energy storage device comprises a battery pack.

11. A display for a battery electric hybrid drive for a combine, having an IC engine and an electric motor for powering the combine, and a electrical energy storage device and a generator driven by the IC engine for charging the electrical energy storage device, comprising:
a first indicator depicting the combine power delivered by the IC engine and the electric motor;
a second indicator depicting the actual electrical energy storage device state of charge; and
a third indicator depicting the flow of power either into or out of the electrical energy storage device.

12. The display according to claim 11, wherein the first indicator comprises a bar graph with a moving indicator.

13. The display according to claim 11, wherein the second indicator comprises a pie chart.

14. The display according to claim 11, wherein the third indicator comprise an arrow display indicating the power flow direction.

15. A combine with a display according to one of claims 11 to 14.
